# EUROPÄISCHE PATENTANMELDUNG

(11) **EP 4 714 633 A1**
(43) Veröffentlichungstag der Anmeldung: **25.03.2026**
(21) Anmeldenummer: 25202499.7
(22) Anmeldetag: 16.09.2025
(51) Int. Cl.: B29C 48/92, B29C 48/76, B29C 48/25, B29C 48/385, B29C 48/70, B29C 48/00, B29C 48/03, B29C 48/06, B29C 48/39, B29C 49/42

(54) **VERFAHREN ZUM EXTRUDIEREN EINES MATERIALS MITTELS EINES MEHRSTUFENEXTRUDERS**

(30) Priorität: 20.09.2024 DE 102024127170
(71) Anmelder: TROESTER GmbH & Co. KG, 30519 Hannover (DE)
(72) Erfinder: PREICK, Dennis, 31832 Springe (DE); HOFFMANN, Wieland, 30539 Hannover (DE)
(74) Vertreter: Scheffler, Jörg

(57) **Zusammenfassung**

Die Erfindung betrifft ein Verfahren bei dem mittels eines Mehrstufenextruders (1) umfassend zumindest zwei Extruderstufen (2, 3) ein Material (4) extrudiert wird, wofür das Material (4) in einer ersten Extruderstufe (2) des Mehrstufenextruders (1) plastifiziert sowie anschließend in eine weitere, bevorzugt zweite Extruderstufe (3) des Mehrstufenextruders (1) überführt, über eine Aufspalteinrichtung (5) des Mehrstufenextruders (1) in einen fragmentierten Zustand verbracht und in diesem Zustand in einem Unterdruckbereich (6) des Mehrstufenextruders (1) einem Unterdruck, vorzugsweise einem technischen Vakuum ausgesetzt wird, sodass flüchtige Bestandteile und/oder eingeschlossenen Gase zumindest anteilsweise aus dem Material (4) entfernt werden. Dabei wird zudem wenigstens ein Materialstrom und/oder wenigstens ein Massedruck des Materials (4) durch die erste Extruderstufe (2) und/oder die weitere Extruderstufe (3) dergestalt automatisiert angepasst, dass mindestens in einem Normalbetrieb des Mehrstufenextruders (1) der Unterdruckbereich (6) höchstens mit einem vorbestimmten, zum Entfernen der Bestandteile und/oder Gase zulässigen Maximalvolumen des Materials (4) gefüllt und/oder der fragmentierte Zustand des Materials (4) aufrechterhalten ist und/oder wird.

## Beschreibung

Die Erfindung betrifft ein Verfahren bei dem mittels eines Mehrstufenextruders umfassend zumindest zwei Extruderstufen ein Material extrudiert wird. Hierfür wird das Material in einer ersten Extruderstufe des Mehrstufenextruders plastifiziert sowie anschließend in eine weitere Extruderstufe des Mehrstufenextruders überführt, zudem über eine Aufspalteinrichtung des Mehrstufenextruders in einen fragmentierten Zustand verbracht und in diesem Zustand in einem Unterdruckbereich des Mehrstufenextruders einem Unterdruck ausgesetzt, sodass flüchtige Bestandteile und/oder eingeschlossene Gase zumindest anteilsweise aus dem Material entfernt werden.

Die Entgasung von hochaktivem Ruß enthaltenden Kautschukmischungen ist besonders kritisch in der Gummiindustrie, insbesondere bei der Herstellung von Reifen und anderen technischen Gummiwaren. Diese Kautschukmischungen, welche oft auch als TBR Cab-Mischungen bezeichnet werden, finden breite Anwendung in der Produktion von Lkw- und Busreifen. Hierbei steht TBR für "Truck and Bus Radial", wo sie für ihre herausragenden Eigenschaften wie Festigkeit und Abriebfestigkeit geschätzt werden. Der Begriff "Cab" bezieht sich auf die Verwendung von hochaktivem Carbon Black, also dem bereits zuvor erwähnten hochaktiven Ruß, welcher zur Verbesserung der mechanischen Eigenschaften der Mischung beiträgt.

Aufgrund der chemischen Eigenschaften von Ruß enthaltenden Kautschukmischungen kann es bei der Verarbeitung mit der gängigen Vorwärmung zur Entstehung einer erhöhten Porosität im Extrudat nach dem Extrusionsprozess kommen. Diese Porosität entsteht insbesondere durch die Freisetzung von Gasen und flüchtigen Bestandteilen, die sich während der Vorwärmung im Material bilden können. In der Folge wirkt sich diese Porosität negativ auf die Eigenschaften der Reifen oder anderer technischer Gummiwaren aus, indem sie die mechanische Festigkeit, Haltbarkeit und Dichtheit der Endprodukte beeinträchtigt. Die ungleichmäßige Verteilung von Gasblasen kann zudem die Leistung des Materials in den nachfolgenden Verarbeitungsschritten und in der endgültigen Anwendung verschlechtern, was zu einem erhöhten Risiko von Defekten und einer verkürzten Lebensdauer der Produkte führt.

Hierbei sind zur Entgasung von plastifizierten Materialien bereits Lösungen aus dem Stand der Technik bekannt.

Die CH 333 283 A beschreibt ein Verfahren und eine Vorrichtung zur kontinuierlichen Mischung, Plastifizierung, Entgasung und Extrusion von Materialien, insbesondere Kunststoffen, in einem einzigen Arbeitsgang. Dabei wird das in einem Kneter gemischte und plastifizierte Material direkt von einer an den Kneter angeschlossenen Austragsschnecke aufgenommen, welche das Material kontinuierlich durch eine Düse ausstößt. Das plastifizierte Material gelangt hierbei vom Kneter stoßweise in die rechtwinklig angeflanschte Austragsschnecke, wobei der stoßweise Eintritt ausgeglichen und das Material unter steigendem Druck weitergefördert wird. Die Entgasung erfolgt an einer Stelle der Austragsschnecke, die hinter dem Punkt liegt, an dem das Material aus dem Kneter eintritt. Hier können die Gase entweder frei entweichen oder durch ein Vakuum abgesaugt werden. Am Einlauf der Austragsschnecke wird das Material dabei intensiv durchgearbeitet, sodass flüchtige Stoffe gasförmig entweichen können.

Durch die DE 25 43 328 A1 sind ebenfalls ein Verfahren und eine Vorrichtung zum Extrudieren von Kunststoffen, Kautschuk und anderen Thermoplasten und Elastomeren, bestehend aus zwei Schneckenextrudern bekannt, bei denen der erste Extruder das Material an den zweiten weiterleitet. Der nachgeschaltete Extruder ist dabei im Eingangsbereich mit einer Entgasungsvorrichtung ausgestattet und mechanisch fest mit dem vorgelagerten Extruder verbunden. Die Einspeisungsstelle in den zweiten Extruder ist zudem in einem mittleren Bereich dieses Extruders angeordnet. Zwischen der Einspeisungsstelle und dem Antrieb des zweiten Extruders befinden sich sowohl ein in Extrusionsrichtung als auch ein in Gegenrichtung geschnittenes Schneckenstück. Im Bereich des gegenläufigen Schneckenstücks ist hierbei ein Auslass für Material, das von der Entgasungsvorrichtung mitgerissen wurde, vorgesehen. Dadurch wird verhindert, dass Materialpartikel, die durch das Aufplatzen von Blasen während der Entgasung entstehen und eine längere Verweilzeit im Extruder haben, in den Materialfluss zurückgelangen. Stattdessen werden sie durch das gegenläufige Schneckenstück zum Auslass geleitet.

Der EP 0 816 048 A1 ist ein weiteres Verfahren sowie eine weitere zweistufige Extrusionsanlage zum Extrudieren von Kautschukmischungen und Kunststoffen in mit einer zwischen den beiden Stufen angeordneten Evakuierungsvorrichtung zu entnehmen. In der ersten Extrusionsstufe kommt ein Zahnradextruder zum Einsatz, während die zweite Stufe aus einem Schneckenextruder besteht. Das Extrudat wird nach der ersten Extrusionsstufe über eine am Ende dieser oder unmittelbar dahinter angeordnete Aufspaltvorrichtung fein zerteilt und/oder aufgespalten. Beim Übergang in die zweite Extrusionsstufe gelangt das zerteilte Extrudat in einen Raum, der mit einer Vakuumpumpe verbunden ist. Das zerteilte oder aufgespaltene Material kann dabei entweder im freien Fall durch diesen evakuierten Raum fallen oder wird durch die Extruderschnecke der zweiten Stufe von der Aufspaltvorrichtung abgeschnitten oder abgeschabt, zudem von dieser übernommen und in den Bereich der tiefen Schneckengänge des Schneckenextruders überführt, wobei dann dieser Bereich evakuiert wird. Die Aufspaltvorrichtung ist dabei insbesondere in Form einer Lochplatte in einer Lochplattenwechselvorrichtung ausgeführt.

Über die vorgenannten Lösungen kann das Auftreten einer Porosität der Reifen oder anderer technischer Gummiwaren nicht stets vermieden werden, da der Prozess der Entgasung überaus abhängig von der Menge an Material im evakuierten Raum ist.

Vor diesem Hintergrund liegt der Erfindung die Aufgabe zugrunde, das Verfahren der eingangs genannten Art so auszugestalten, dass das Entfernen von flüchtigen Bestandteilen und/oder eingeschlossenen Gasen aus dem plastifizierten Material stets gewährleistet werden kann.

Diese Aufgabe wird erfindungsgemäß mit einem Verfahren gemäß den Merkmalen des Anspruchs 1 gelöst. Die weitere Ausgestaltung der Erfindung ist den Unteransprüchen zu entnehmen.

Erfindungsgemäß ist also ein Verfahren vorgesehen, bei dem mittels eines Mehrstufenextruders ein Material, beispielsweise ein Kunststoff, bevorzugt eine Kautschukmischung, besonders bevorzugt eine Kautschukmischung mit beigemengtem, z. B. hochaktivem Ruß wie eine TBR Cab-Mischung, extrudiert wird. Vorzugsweise ist der Mehrstufenextruder hierbei ein Zweistufenextruder, z. B. ein Tandemextruder. Zum Extrudieren umfasst der Mehrstufenextruder erfindungsgemäß zumindest zwei, bevorzugt jedoch ausschließlich zwei Extruderstufen. Die Extruderstufen sind dabei vorzugsweise lösbar miteinander verbunden und/oder in einem voneinander gelösten Zustand auseinanderbewegbar, z. B. auseinanderfahrbar. So lassen sich die Extruderstufen in vorteilhafter Weise einfach reinigen und/oder warten.

Erfindungsgemäß ist darüber hinaus vorgesehen, dass das Material zum Extrudieren zunächst in einer ersten Extruderstufe des Mehrstufenextruders plastifiziert und anschließend in eine weitere, bevorzugt zweite Extruderstufe des Mehrstufenextruders überführt wird, wofür das Material der ersten Extruderstufe entsprechend zuerst zugeführt würde. Beispielsweise vor, bevorzugt während und/oder z. B. nach dem Überführen in die weitere Extruderstufe, wird das Material in erfindungsgemäßer Weise über eine Aufspalteinrichtung des Mehrstufenextruders in einen fragmentierten, also aufgespaltenen und/oder fein zerteilten Zustand verbracht und in diesem Zustand in einem Unterdruckbereich des Mehrstufenextruders einem, insbesondere gegenüber einem Umgebungsdruck verminderten Unterdruck, vorzugsweise einem technischen Vakuum ausgesetzt, sodass flüchtige Bestandteile und/oder eingeschlossene Gase zumindest anteilsweise, bevorzugt vollständig aus dem Material entfernt werden. Das Material wird somit insbesondere entgast. Der Unterdruckbereich ist hierbei vorzugsweise ein Übergangsabschnitt zwischen der ersten Extruderstufe und der weiteren, insbesondere zweiten Extruderstufe. Denkbar wäre jedoch ebenso, dass der Unterdruckbereich in einem Abschnitt der ersten Extruderstufe, also vor dem Übergangsabschnitt oder einem Abschnitt der weiteren Extruderstufe, also nach dem Übergangsabschnitt ausgeführt ist. Ferner könnte auch der Übergangsabschnitt und ein Abschnitt der ersten Extruderstufe vor dem Übergangsabschnitt oder ein Abschnitt der weiteren Extruderstufe nach dem Übergangsabschnitt als Unterdruckbereich ausgebildet sein. Die Aufspalteinrichtung kann ferner als ein Sieb oder eine Lochscheibe ausgeführt und beispielsweise in einer Aufnahme, vorzugsweise einer Wechselvorrichtung lösbar befestigt und/oder somit tauschbar ausgestaltet sein. Derart kann die Aufspalteinrichtung an das zu extrudierende Material angepasst und durch Änderung geometrischer Eigenschaften der Aufspalteinrichtung, beispielsweise einer Lochanzahl, eines Lochabstands und/oder eines Lochdurchmessers Prozessparameter wie die aufgrund des Fragmentierens bewirkte freie Oberfläche des Materials und/oder der durch die Aufspalteinrichtung bedinge Gegendruck auf das geförderte Material beeinflusst werden.

Wenigstens ein Materialstrom und/oder wenigstens ein Massedruck des Materials durch die erste Extruderstufe und/oder die weitere, insbesondere zweite Extruderstufe wird erfindungsgemäß zudem dergestalt automatisiert angepasst, d. h. vorzugsweise gesteuert und/oder geregelt, dass mindestens in einem Normalbetrieb, auch einem Produktionsmodus des Mehrstufenextruders der Unterdruckbereich höchstens mit einem vorbestimmten, zum Entfernen der Bestandteile und/oder Gase zulässigen Maximalvolumen des Materials gefüllt und/oder der fragmentierte Zustand des Materials aufrechterhalten ist und/oder wird. So wird sichergestellt, dass der Unterdruckbereich des Mehrstufenextruders nicht durch Material überflutet wird und flüchtige Bestandteile und/oder eingeschlossene Gase zuverlässig aus dem plastifizierten Material entfernt werden. Dadurch lässt sich eine Porosität in aus dem extrudierten Material hergestellten Erzeugnissen, wie Reifen oder anderen technischen Gummiwaren, vermeiden, was insbesondere die mechanische Festigkeit und Haltbarkeit der Erzeugnisse gewährleistet.

In einer besonders vorteilhaften Weiterbildung der Erfindung wird der Materialstrom und/oder der Massedruck zudem dergestalt angepasst, dass mindestens in dem Normalbetrieb des Mehrstufenextruders zumindest ein in eine Förderrichtung des Mehrstufenextruders, bevorzugt der weiteren, insbesondere zweiten Förderstufe an den Unterdruckbereich, mittelbar oder unmittelbar, folgender Dichtbereich, bevorzugt in einem Endabschnitt des Mehrstufenextruders, derart gefüllt ist, dass das Material im Dichtbereich den Unterdruckbereich im Mindesten gegen eine Austrittsöffnung des Mehrstufenextruders, vorzugsweise eine Extrusionsdüse oder ein Mundstück, abdichtet. Vorzugsweise ist der Dichtbereich dabei vollständig mit Material gefüllt. Dies trägt ebenfalls zum sicheren Entfernen der flüchtigen Bestandteile und/oder eingeschlossenen Gase aus dem Material bei, da hierdurch, insbesondere in Kombination mit weiteren Dichtmaßnahmen ein hoher Unterdruck im Unterdruckbereich gewährleistet werden kann.

In einer vielversprechenden Ausführungsform der Erfindung ist darüber hinaus vorgesehen, dass das Anpassen des Materialstroms zumindest dadurch erfolgt, dass, vorzugsweise wenn und/oder sobald, bei einem, insbesondere nach einem Übergang aus einem Anfahrbetrieb des Mehrstufenextruders in den Normalbetrieb, im Dichtbereich vorherrschenden, kontinuierlichen Materialstrom und/oder Massedruck des Materials, ein Durchsatz des Materials durch die weitere, insbesondere zweite Extruderstufe auf einen Solldurchsatz eingestellt, vorzugsweise gesteuert und/oder geregelt wird. Die Einhaltung des Solldurchsatzes trägt dabei zur Stabilität des gesamten Extrusionsprozesses bei. Der Solldurchsatz minimiert das Risiko von Prozessunterbrechungen oder Störungen, wie z.B. Überfüllungen, Materialstaus oder Unterversorgung, auch in nachfolgenden Produktionsschritten. Das Einstellen des Durchsatzes des Materials auf den Solldurchsatz sowie auch im Allgemeinen wird, insbesondere durch Änderung einer Förderleistung, beispielsweise durch Änderung einer Drehzahl einer Fördereinrichtung der weiteren, insbesondere zweiten Extruderstufe durchgeführt. Beispielhaft kann der Solldurchsatz somit dadurch eingestellt werden, dass eine Drehzahl der Fördereinrichtung der weiteren Extruderstufe auf eine Solldrehzahl gebracht und/oder diese Solldrehzahl angefahren wird. Eine solche Fördereinrichtung kann, wie bei der ersten Extruderstufe ebenso, z. B. eine Extruderschnecke oder eine Zahnradpumpe respektive zumindest eines derer Extruderzahnräder sein. Demnach besteht die Möglichkeit, dass die erste Extruderstufe und/oder die zweite Extruderstufe als ein Schneckenextruder oder ein Zahnradextruder ausgestaltet ist.

Im Allgemeinen, jedoch vorzugsweise im Zusammenhang mit der vorstehenden Ausführungsform ist eine Weiterbildung der Erfindung als überaus gewinnbringend anzusehen, bei der das Anpassen des Materialstroms zumindest erfolgt, indem bei einem, insbesondere nach einem Übergang aus einem Anfahrbetrieb des Mehrstufenextruders in den Normalbetrieb, im Dichtbereich vorherrschenden, kontinuierlichen Materialstrom und/oder Massedruck des Materials ein - vorherrschender - Durchsatz des Materials durch die erste Extruderstufe auf einen, insbesondere gegenüber dem - vorherrschenden - Durchsatz, verminderten Zieldurchsatz eingestellt, der Durchsatz also insbesondere auf den Zieldurchsatz verringert wird. Hierdurch wird das Überführen respektive die Zufuhr von Material in die zweite Extruderstufe vorteilhaft kontrolliert. Das Einstellen des Durchsatzes auf den Zieldurchsatz kann dabei wiederum durch eine Änderung der Förderleistung, insbesondere durch Änderung, vorzugsweise durch Verringern der Drehzahl der Fördereinrichtung der ersten Extruderstufe erfolgen. Durch die gezielte Reduzierung des Durchsatzes in der ersten Extruderstufe auf den Zieldurchsatz kann hierbei das Überführen respektive die Zufuhr von Material in die zweite Extruderstufe präzise kontrolliert und/oder angepasst werden. So kann beispielsweise ein Überfüllen und/oder Überlasten der nachfolgenden, weiteren Extruderstufe verhindert und für einen stabilen Materialstrom gesorgt werden. Es wird somit eine gleichmäßige und bedarfsgerechte Zufuhr von Material in die zweite Extruderstufe ermöglicht. Dies trägt dazu bei, dass die Verarbeitungskapazität der zweiten Extruderstufe optimal genutzt wird, was die Effizienz des gesamten Extrusionsprozesses erhöht.

In bevorzugter Ausgestaltung der Erfindung, insbesondere in Verbindung mit der vorstehenden Weiterbildung und/oder Ausführungsform, wird der Zieldurchsatz des Materials durch die erste Extruderstufe so eingestellt, dass im Dichtbereich - weiterhin - ein kontinuierlicher Materialstrom und/oder Massedruck des Materials vorherrscht, indessen jedoch in einem Förderbereich, bevorzugt der weiteren, insbesondere zweiten Extruderstufe, vor dem Dichtbereich und/oder nach dem Unterdruckbereich ein diskontinuierlicher Materialstrom und/oder Massedruck des Materials vorliegt. Dies führt überaus vorteilhaft dazu, dass der Förderbereich nicht vollständig mit Material gefüllt ist und dadurch realisiert wird, dass der Unterdruckbereich des Mehrstufenextruders höchstens mit dem vorbestimmten, zum Entfernen der Bestandteile und/oder Gase zulässigen Maximalvolumen des Materials gefüllt und/oder der fragmentierte Zustand des Materials aufrechterhalten wird. Der Unterdruckbereich wird also durch die Ausgestaltung nicht mit Material überflutet.

Zum Einstellen und/oder Ermitteln des Zieldurchsatzes des Materials durch die erste Extruderstufe wird in einer vielversprechenden Ausgestaltung der Erfindung ein Durchsatz durch die erste Extruderstufe verringert, wenn in dem Förderbereich ein kontinuierlicher Materialstrom und/oder ein kontinuierlicher Massedruck des Materials auftritt und/oder vorherrscht. Durch das Verringern des Durchsatzes wird somit zunächst bewirkt, dass sich im Förderbereich der vorgesehene diskontinuierliche Materialstrom und/oder Massedruck einstellt. Hierbei könnte der Durchsatz jedoch derart weit verringert werden, dass dieser nicht mehr ausreichend hoch ist, um im Dichtbereich den vorgesehenen kontinuierlichen Massestrom einzustellen und/oder aufrechtzuerhalten, sodass sich ein nicht erwünschter, diskontinuierlicher Materialstrom und/oder Massedruck einstellen würde.

So ist darüber hinaus vorgesehen, dass der Zieldurchsatz des Materials durch die erste Extruderstufe in einer Weiterbildung der Erfindung eingestellt und/oder ermittelt wird, indem ein Durchsatz des Materials durch die erste Extruderstufe nach dem Verringern wieder erhöht wird, wenn in dem Dichtbereich ein diskontinuierlicher Materialstrom und/oder Massedruck des Materials auftritt und/oder vorliegt. Insbesondere kann hierbei ein beim Einstellen des Zieldurchsatzes für einen diskontinuierlichen Materialstrom und/oder Massedruck im Förderbereich derart weit verringerter Durchsatz, dass ein im Dichtbereich, insbesondere vorherrschender kontinuierlicher Materialstrom und/oder Massedruck des Materials in einen diskontinuierlichen Materialstrom und/oder ein Massedruck des Materials übergeht, wieder erhöht werden, sodass sich, insbesondere erneut ein kontinuierlicher Materialstrom und/oder Massedruck einstellt. Derart kann gewinnbringend ein Zieldurchsatz der ersten Extruderstufe eingestellt werden, der, insbesondere abhängig vom Solldurchsatz der weiteren Extruderstufe, einen diskontinuierlichen Materialstrom und/oder Massedruck im Förderbereich und einen kontinuierlichen Materialstrom und/oder Massedruck im Dichtbereich verwirklicht.

Zum Einstellen des Zieldurchsatzes können mehrere Iterationen des Verringerns und des Erhöhens des Durchsatzes des Materials durch die erste Extruderstufe erfolgen. Insbesondere kann das Einstellen des Zieldurchsatzes in dessen Einregeln, bevorzugt über eine Regelschleife bestehen.

Insbesondere in vorstehendem Zusammenhang stellt sich eine Ausführungsform der Erfindung vorteilhaft dar, bei der der ermittelte Zieldurchsatz des Materials der ersten Extruderstufe zudem für einen, in einem auf einen erneuten Anfahrbetrieb folgenden, weiteren Normalbetrieb, d. h. insbesondere für einen weiteren Produktionsprozess, vorgehalten und/oder in dem auf den erneuten Anfahrbetrieb folgenden, weiteren Normalbetrieb, d. h. insbesondere in einem weiteren Produktionsprozess, zumindest vorläufig als Durchsatz der ersten Extruderstufe eingestellt wird. Das Einstellen des im vorhergehenden Normalbetrieb, d. h. insbesondere im vorhergehenden Produktionsprozess, ermittelten Zieldurchsatzes ermöglicht dabei entweder eine kürzere Einstellzeit bis der Zieldurchsatz im weiteren Normalbetrieb eingestellt ist oder gar den vollständigen Wegfall einer solchen Einstellzeit, insbesondere, wenn das gleiche Material bei gleichen Prozessparametern und/oder -bedingungen erneut extrudiert wird.

Das Einstellen und/oder Ermitteln des Zieldruchsatzes kann wiederum durch Änderung einer Förderleistung, insbesondere durch Ändern, insbesondere Verringern einer Drehzahl einer Fördereinrichtung der ersten Extruderstufe auf eine Zieldrehzahl durchgeführt werden. Beispielhaft kann die Zieldrehzahl somit dadurch eingestellt werden, dass eine Drehzahl der Fördereinrichtung der ersten Extruderstufe verringert wird, bis ein diskontinuierlicher Materialstrom und/oder Massedruck im Förderbereich vorherrscht und wieder erhöht wird, wenn ein im Dichtbereich, insbesondere vorherrschender kontinuierlicher Materialstrom und/oder Massedruck des Materials in einen diskontinuierlichen Materialstrom und/oder ein Massedruck des Materials übergeht, sodass sich, insbesondere erneut ein kontinuierlicher Materialstrom und/oder Massedruck einstellt.

In praxisgerechter Ausgestaltung der Erfindung wird ferner zumindest in einem Anfahrbetrieb des Mehrstufenextruders durch die erste Extruderstufe Material gefördert, bis am Unterdruckbereich, insbesondere in eine Förderrichtung unmittelbar vor dem Unterdruckbereich, und/oder im Unterdruckbereich ein Materialstrom und/oder ein Massedruck des Materials mit einem Nenndurchsatz vorherrscht. Dies führt vorteilhaft zu einer effizienteren Nutzung von Ressourcen und senkt die Betriebskosten.

Weiterhin ist in einer Ausführungsform der Erfindung angedacht, dass zumindest in dem Anfahrbetrieb des Mehrstufenextruders bei einem Vorherrschen eines Materialstroms und/oder eines Massedrucks am und/oder im Unterdruckbereich mit dem Nenndurchsatz die weitere, insbesondere zweite Extruderstufe, insbesondere aus einem Ruhezustand in einen Förderzustand überführt und ein Durchsatz der weiteren, insbesondere zweiten Extruderstufe in eine feste Relation zum Nenndurchsatz der ersten Extruderstufe eingestellt wird. Derart können zunächst stabile Prozessbedingungen etabliert werden, und die Extrusion des Materials kann mit hoher Qualität beginnen. Zudem wird die Menge an Ausschussmaterial im sich anschließenden Normalbetrieb reduziert und die Gesamteffizienz des Extrusionsprozesses gesteigert. Das Erreichen eines stabilen Materialstroms und/oder Massedrucks ermöglicht zudem einen flexiblen und kontrollierten Übergang vom Anfahrbetrieb in den Normalbetrieb.

Die Erfindung lässt verschiedene Ausführungsformen zu. Zur weiteren Verdeutlichung ihres Grundprinzips sind einige davon in der Zeichnung dargestellt und werden nachfolgend beschrieben. Die Zeichnung zeigt in
- Fig. 1: eine Ausführungsform des Verfahrens und einen dafür verwendeten Mehrstufenextruder;
- Fig. 2: eine weitere Ausführungsform eines Mehrstufenextruders mit einem Höhenversatz zwischen den Extruderstufen.

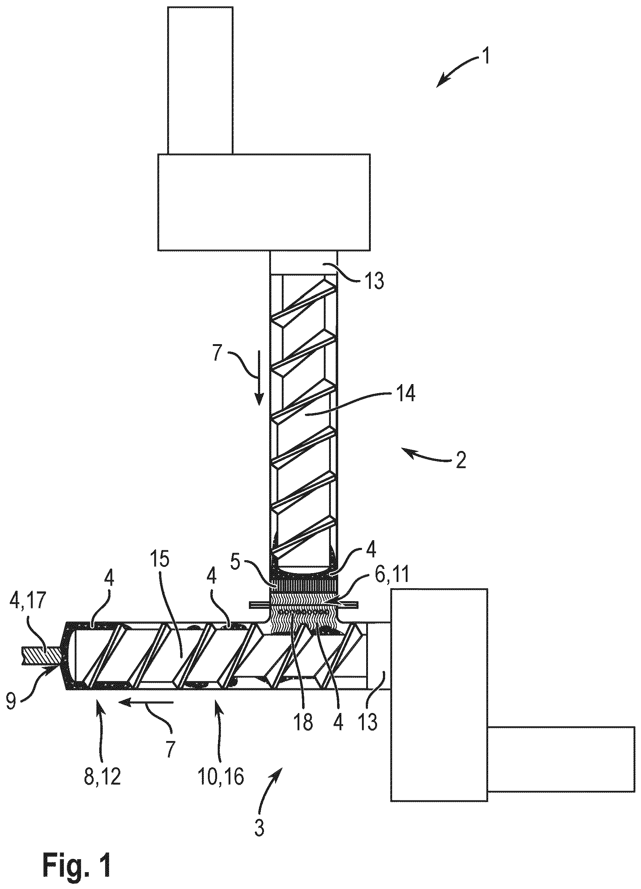

Figur 1 zeigt eine Ausführungsform des erfindungsgemäßen Verfahrens, wobei mittels des Mehrstufenextruders 1 das Material 4 extrudiert wird, wofür der Mehrstufenextruder 1 zwei Extruderstufen 2, 3 umfasst. Der Mehrstufenextruder 1 ist somit im Speziellen als ein Zweistufen- oder Tandemextruder ausgeführt.

Zum Extrudieren wird das Material 4 dabei in der ersten Extruderstufe 2 des Mehrstufenextruders 1 zunächst plastifiziert und anschließend in die weitere, hier zweite Extruderstufe 3 des Mehrstufenextruders 1 überführt.

Um eine Porosität des Extrudats 17 aus dem Material 4, hier im Speziellen einer hochaktives Ruß enthaltenden Kautschukmischung, zu vermeiden, werden flüchtige Bestandteile und/oder eingeschlossene Gase beim Übergang des Materials 4 aus der ersten Extruderstufe 2 in die zweite Extruderstufe 3 aus dem Material 4 entfernt. Hierfür weist der Mehrstufenextruder 1 die Aufspalteinrichtung 5 auf, welche in dem Übergangsabschnitt 11 zwischen der ersten Extruderstufe 2 und der zweiten Extruderstufe 3 lösbar befestigt ist. Über die Aufspalteinrichtung 5, in dieser Ausführungsform des Mehrstufenextruders 1 eine Lochscheibe, wird das Material 4 in einen fragmentierten Zustand verbracht, indem es in die Förderrichtung 7 durch die Aufspalteinrichtung 5 gepresst wird. In diesem fragmentierten Zustand wird das Material 4 in dem Unterdruckbereich 6 des Mehrstufenextruders 1, welcher in dem in Förderrichtung 7 auf die Aufspalteinrichtung 5 unmittelbar folgenden Übergangsabschnitt 11 ausgeführt ist, einem gegenüber dem Umgebungsdruck verringerten Unterdruck, vorzugsweise einem technischen Vakuum ausgesetzt. Dieser wird dabei über den Unterdruckanschluss 18, welcher mit einer nicht näher dargestellten Unterdruckeinrichtung, beispielsweise einer Vakuumpumpe verbunden ist, bereitgestellt.

Um dabei stets ein optimales Entfernen der flüchtigen Bestandteile und/oder eingeschlossenen Gase aus dem Material 4 gewährleisten zu können, insbesondere indem ein Überfluten des Unterdruckbereichs 6 mit Material 4 vermieden wird, wird der Materialstrom und/oder der Massedruck des Materials 4 durch die erste Extruderstufe 2 und die weitere Extruderstufe 3 dergestalt automatisiert angepasst, dass in dem in der Figur 1 dargestellten Normalbetrieb des Mehrstufenextruders 1 der Unterdruckbereich 6 höchstens mit einem vorbestimmten, zum Entfernen der Bestandteile und/oder Gase zulässigen Maximalvolumen des Materials 4 gefüllt ist und/oder der fragmentierte Zustand des Materials 4 stets aufrechterhalten wird.

Darüber hinaus wird der Materialstrom und/oder der Massedruck des Materials 4 durch die erste Extruderstufe 2 und die weitere Extruderstufe 3 dergestalt angepasst, dass im Normalbetrieb des Mehrstufenextruders 1 der in die Förderrichtung 7 des Mehrstufenextruders 1 mittelbar auf den Unterdruckbereich 6 folgende Dichtbereich 8 vollständig gefüllt ist, sodass das Material 4 im Dichtbereich 8 den Unterdruckbereich 6 im Mindesten gegen die Austrittsöffnung 9 des Mehrstufenextruders 1 abdichtet. Der Dichtbereich 8 ist dabei in dieser Ausführungsform im Endabschnitt 12 der zweiten Extruderstufe 3 ausgeführt. Zusätzlich hierzu sind sowohl die erste Extruderstufe 2 als auch die zweite Extruderstufe 3 am jeweiligen antriebseitigen Lager 13 der Fördereinrichtungen 14, 15 der Extruderstufen 2, 3 druckdicht abgedichtet.

In dem, dem Normalbetrieb vorangehenden, nicht näher dargestellten Anfahrbetrieb des Mehrstufenextruders 1 wird durch die erste Extruderstufe 2, insbesondere zunächst solange Material 4 gefördert, bis am Unterdruckbereich 6, hier insbesondere in die Förderrichtung 7 unmittelbar vor dem Unterdruckbereich 6 der Materialstrom und/oder der Massedruck des Materials 4 mit einem Nenndurchsatz vorherrscht. Dies erfolgt dabei, indem die erste Extruderstufe 2 aus einem Ruhezustand in einen Förderzustand überführt und die Förderleistung der als eine Extruderschnecke ausgebildeten Fördereinrichtung 14 der ersten Extruderstufe 2 geändert, hier gesteigert wird. Im Speziellen wird dies durch Änderung, hier Steigerung der Drehzahl der als Extruderschnecke ausgebildeten Fördereinrichtung 14 auf eine Nenndrehzahl verwirklicht.

Anschließend wird in dem Anfahrbetrieb des Mehrstufenextruders 1 beim Vorherrschen des Materialstroms und/oder des Massedrucks am Unterdruckbereich 6 mit dem Nenndurchsatz die weitere Extruderstufe 3 aus einem Ruhezustand in einen Förderzustand überführt und der Durchsatz der weiteren Extruderstufe 3 zunächst in eine feste Relation zum Nenndurchsatz der ersten Extruderstufe 2 eingestellt. Dies erfolgt wiederum dadurch, dass die Förderleistung der ebenfalls als eine Extruderschnecke ausgebildeten Fördereinrichtung 15 der zweiten Extruderstufe 3 geändert, hier wiederum gesteigert wird, bis die Drehzahl der Fördereinrichtung 15 in einer festen Relation zur Nenndrehzahl der Fördereinrichtung 14 der ersten Extruderstufe 2 steht.

Die erste Extruderstufe 2 sowie die zweite Extruderstufe 3 sind somit in dieser Ausführungsform jeweils als ein Schneckenextruder ausgeführt.

Das automatisierte Anpassen des Materialstroms und/oder Massedrucks des Materials 4 erfolgt nunmehr einerseits dadurch, dass bei einem, nach dem Übergang aus dem Anfahrbetrieb des Mehrstufenextruders 1 in den Normalbetrieb, im Dichtbereich 8 vorherrschenden, kontinuierlichen Materialstrom und/oder Massedruck des Materials 4 ein Durchsatz des Materials 4 durch die weitere, hier zweite Extruderstufe 3 auf einen Solldurchsatz eingestellt wird. Das Einstellen des Solldurchsatzes erfolgt dabei wiederum, indem die Drehzahl der Fördereinrichtung 15 der weiteren, hier zweiten Extruderstufe 3 auf eine Solldrehzahl gebracht und/oder diese Solldrehzahl angefahren wird.

Das automatisierte Anpassen des Materialstroms und/oder Massedrucks des Materials 4 erfolgt darüber hinaus zudem dadurch, dass bei einem im Normalbetrieb im Dichtbereich 8 vorherrschenden, kontinuierlichen Materialstrom und/oder Massedruck des Materials 4 der Durchsatz des Materials 4 durch die erste Extruderstufe 2 auf einen verminderten Zieldurchsatz eingestellt wird.

Der Zieldurchsatz des Materials 4 durch die erste Extruderstufe 2 wird dabei vorerst so eingestellt, dass im Dichtbereich 8, wie in der Figur 1 dargestellt, ein kontinuierlicher Materialstrom und/oder Massedruck des Materials 4 vorherrscht, jedoch in dem Förderbereich 10 des Mehrstufenextruders 1, der in die Förderrichtung 7 des Mehrstufenextruders 1 vor dem Dichtbereich 8 und nach dem Unterdruckbereich 6 im Förderabschnitt 16 des Mehrstufenextruders 1 ausgeführt ist, wie ebenfalls der Figur 1 zu entnehmen, ein diskontinuierlicher Materialstrom und/oder Massedruck des Materials 4 vorliegt. Im Speziellen ist der Förderabschnitt 16 Teil der zweiten Extruderstufe 3.

Um dies zu erreichen, wird der Zieldurchsatz des Materials 4 durch die erste Extruderstufe 2 eingestellt und/oder ermittelt, indem der Durchsatz durch die erste Extruderstufe 2 verringert wird, wenn in dem Förderbereich 10 ein kontinuierlicher Materialstrom und/oder ein kontinuierlicher Massedruck des Materials 4 auftritt und/oder vorherrscht. Der Durchsatz des Materials 4 durch die erste Extruderstufe 2 wird nach dem Verringern zudem wieder erhöht, wenn in dem Dichtbereich 8 ein diskontinuierlicher Materialstrom und/oder ein Massedruck des Materials 4 auftritt und/oder vorliegt. Derart kann, insbesondere über mehrere Iterationen des Verringerns und des Erhöhens des Durchsatzes des Materials 4 durch die erste Extruderstufe 2 der Zieldurchsatz eingestellt, insbesondere eingeregelt und ermittelt werden.

Der ermittelte Zieldurchsatz des Materials 4 durch die erste Extruderstufe 2 wird sodann für einen auf einen erneuten Anfahrbetrieb folgenden, weiteren Normalbetrieb vorgehalten und/oder in dem auf den erneuten Anfahrbetrieb folgenden, weiteren Normalbetrieb, zumindest vorläufig als Durchsatz der ersten Extruderstufe 2 eingestellt.

Das Einstellen und/oder Ermitteln des Zieldurchsatzes erfolgt dabei wiederum, indem die Drehzahl der Fördereinrichtung 14 der ersten Extruderstufe 2 in eine Zieldrehzahl gebracht, hier insbesondere verringert und/oder erhöht wird.

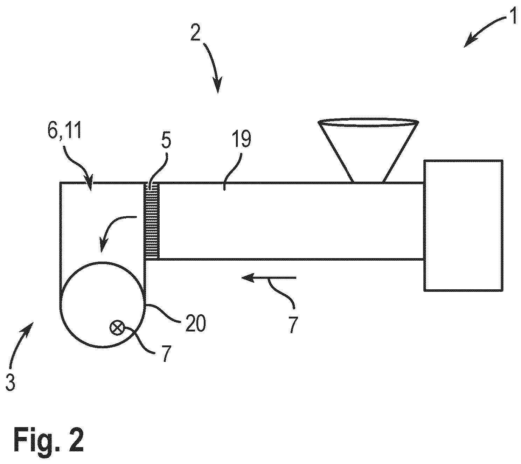

Aus der Figur 2 geht weiterhin eine Ausführungsform des Mehrstufenextruders 1 hervor, welcher wiederum als ein Zweistufenextruder mit der ersten Extruderstufe 2 und der zweiten Extruderstufe 3 ausgebildet ist. Hierbei ist im in Förderrichtung 7 auf die Aufspalteinrichtung 5 folgenden Übergangsabschnitt 11 zwischen der ersten Extruderstufe 2 und der zweiten Extruderstufe 3 erneut der Unterdruckbereich 6 ausgeführt. Das nicht näher dargestellte Material 4 fällt in dieser Ausführungsform beim Überführen von der ersten Extruderstufe 2 in die zweite Extruderstufe 3 zumindest schwerkraftbedingt durch den Unterdruckbereich 6 hindurch, da zwischen dem Zylinder 19 der ersten Extruderstufe 2 und dem Zylinder 20 der zweiten Extruderstufe 3 ein Abstand in Richtung der Hochachse, also insbesondere ein Höhenunterschied vorliegt. Das Überführen ist dabei durch einen Pfeil angedeutet.

**BEZUGSZEICHENLISTE**

| | | | |
|---|---|---|---|
| 1 | Mehrstufenextruder | 16 | Förderabschnitt |
| 2 | Extruderstufe | 17 | Extrudat |
| 3 | Extruderstufe | 18 | Unterdruckanschluss |
| 4 | Material | 19 | Zylinder |
| 5 | Aufspalteinrichtung | 20 | Zylinder |
| 6 | Unterdruckbereich | | |
| 7 | Förderrichtung | | |
| 8 | Dichtbereich | | |
| 9 | Austrittsöffnung | | |
| 10 | Förderbereich | | |
| 11 | Übergangsabschnitt | | |
| 12 | Endabschnitt | | |
| 13 | Lager | | |
| 14 | Fördereinrichtung | | |
| 15 | Fördereinrichtung | | |

## Patentansprüche

1. Verfahren bei dem mittels eines Mehrstufenextruders (1) umfassend zumindest zwei Extruderstufen (2, 3) ein Material (4) extrudiert wird, wofür das Material (4) in einer ersten Extruderstufe (2) des Mehrstufenextruders (1) plastifiziert sowie anschließend in eine weitere, bevorzugt zweite Extruderstufe (3) des Mehrstufenextruders (1) überführt, über eine Aufspalteinrichtung (5) des Mehrstufenextruders (1) in einen fragmentierten Zustand verbracht und in diesem Zustand in einem Unterdruckbereich (6) des Mehrstufenextruders (1) einem Unterdruck, vorzugsweise einem technischen Vakuum ausgesetzt wird, sodass flüchtige Bestandteile und/oder eingeschlossenen Gase zumindest anteilsweise aus dem Material (4) entfernt werden, **dadurch gekennzeichnet, dass** wenigstens ein Materialstrom und/oder wenigstens ein Massedruck des Materials (4) durch die erste Extruderstufe (2) und/oder die weitere Extruderstufe (3) dergestalt automatisiert angepasst wird, dass mindestens in einem Normalbetrieb des Mehrstufenextruders (1) der Unterdruckbereich (6) höchstens mit einem vorbestimmten, zum Entfernen der Bestandteile und/oder Gase zulässigen Maximalvolumen des Materials (4) gefüllt und/oder der fragmentierte Zustand des Materials (4) aufrechterhalten ist und/oder wird.

2. Verfahren nach Anspruch 1, **dadurch gekennzeichnet, dass** der Materialstrom und/oder der Massedruck dergestalt angepasst wird, dass mindestens in dem Normalbetrieb des Mehrstufenextruders (1) zumindest ein sich in eine Förderrichtung (7) des Mehrstufenextruders (1) an den Unterdruckbereich (6) anschließender Dichtbereich (8) derart, insbesondere vollständig gefüllt ist, sodass das Material (4) im Dichtbereich (8) den Unterdruckbereich (6) im Mindesten gegen eine Austrittsöffnung (9) des Mehrstufenextruders (1) für das Material (4) abdichtet.

3. Verfahren nach Anspruch 1 oder 2, **dadurch gekennzeichnet, dass** das Anpassen des Materialstroms und/oder des Massedrucks zumindest erfolgt, indem bei einem, insbesondere nach einem Übergang aus einem Anfahrbetrieb des Mehrstufenextruders (1) in den Normalbetrieb, im Dichtbereich (8) vorherrschenden, kontinuierlichen Materialstrom und/oder Massedruck des Materials (4) ein Durchsatz des Materials (4) durch die weitere Extruderstufe (3) auf einen Solldurchsatz eingestellt wird.

4. Verfahren nach zumindest einem der vorhergehenden Ansprüche, **dadurch gekennzeichnet, dass** das Anpassen des Materialstroms und/oder des Massedrucks zumindest erfolgt, indem bei einem, insbesondere nach einem Übergang aus einem Anfahrbetrieb des Mehrstufenextruders (1) in den Normalbetrieb, im Dichtbereich (8) vorherrschenden, kontinuierlichen Materialstrom und/oder Massedruck des Materials (4) ein Durchsatz des Materials (4) durch die erste Extruderstufe (2) auf einen verminderten Zieldurchsatz eingestellt wird.

5. Verfahren nach zumindest einem der vorhergehenden Ansprüche, **dadurch gekennzeichnet, dass** der Zieldurchsatz des Materials (4) durch die erste Extruderstufe (2) so eingestellt wird, dass im Dichtbereich (8) ein kontinuierlicher Materialstrom und/oder Massedruck des Materials vorherrscht, jedoch in einem Förderbereich (10) des Mehrstufenextruders (1) in eine Förderrichtung (7) des Mehrstufenextruders (1) vor dem Dichtbereich (8) und/oder nach dem Unterdruckbereich (6) ein diskontinuierlicher Materialstrom und/oder Massedruck des Materials (4) vorliegt.

6. Verfahren nach zumindest einem der vorhergehenden Ansprüche, **dadurch gekennzeichnet, dass** der Zieldurchsatz des Materials (4) durch die erste Extruderstufe (2) eingestellt und/oder ermittelt wird, indem ein Durchsatz durch die erste Extruderstufe (2) verringert wird, wenn in dem Förderbereich (10) ein kontinuierlicher Materialstrom und/oder ein kontinuierlicher Massedruck des Materials (4) auftritt und/oder vorherrscht.

7. Verfahren nach zumindest einem der vorhergehenden Ansprüche, **dadurch gekennzeichnet, dass** der Zieldurchsatz des Materials (4) durch die erste Extruderstufe (2) eingestellt und/oder ermittelt wird, indem ein Durchsatz des Materials (4) durch die erste Extruderstufe (2), insbesondere nach dem Verringern wieder erhöht wird, wenn in dem Dichtbereich (8) ein diskontinuierlicher Materialstrom und/oder ein Massedruck des Materials (4) auftritt und/oder vorliegt.

8. Verfahren nach zumindest einem der vorhergehenden Ansprüche, **dadurch gekennzeichnet, dass** der ermittelte Zieldurchsatz des Materials (4) durch die erste Extruderstufe (2) für einen auf einen erneuten Anfahrbetrieb folgenden, weiteren Normalbetrieb vorgehalten und/oder in dem auf den erneuten Anfahrbetrieb folgenden, weiteren Normalbetrieb, zumindest vorläufig als Durchsatz der ersten Extruderstufe (2) eingestellt wird.

9. Verfahren nach zumindest einem der vorhergehenden Ansprüche, **dadurch gekennzeichnet, dass** zumindest in einem Anfahrbetrieb des Mehrstufenextruders (1) durch die erste Extruderstufe (2) Material (4) gefördert wird, bis am Unterdruckbereich (6), insbesondere in eine Förderrichtung (7) unmittelbar vor dem Unterdruckbereich (6), und/oder im Unterdruckbereich (6) ein Materialstrom und/oder ein Massedruck des Materials (4) mit einem Nenndurchsatz vorherrscht.

10. Verfahren nach zumindest einem der vorhergehenden Ansprüche, **dadurch gekennzeichnet, dass** zumindest in dem Anfahrbetrieb des Mehrstufenextruders (1) bei einem Vorherrschen eines Materialstroms und/oder eines Massedrucks am und/oder im Unterdruckbereich (6) mit dem Nenndurchsatz die weitere Extruderstufe (3), insbesondere aus einem Ruhezustand in einen Förderzustand überführt und ein Durchsatz der weiteren Extruderstufe (3) zumindest zunächst in eine feste Relation zum Nenndurchsatz der ersten Extruderstufe (2) eingestellt wird.
